# EUROPEAN PATENT APPLICATION

(11) **EP 4 032 395 A1**
(43) Date of publication of application: **27.07.2022**
(21) Application number: 22150008.5
(22) Date of filing: 03.01.2022
(51) Int. Cl.: A01G 9/14, A01G 31/04

(54) **A METHOD OF GROWING PLANTS USING A WATER-LAYER SYSTEM**

(30) Priority: 14.01.2021 NL 2027314; 15.01.2021 NL 2027322
(71) Applicant: Logiqs B.V., 2676 LV Maasdijk (NL)
(72) Inventor: VAN STAALDUINEN, Gerrit Johannes, 2676 LT Maasdijk (NL)
(74) Representative: Vernout, Robert

(57) **Abstract**

A method of growing plants using a water-layer system, said method making use of a moveable container (100) comprising
- a water-layer unit (300) comprising a water tray (400), and
- a rectangular frame (200), said rectangular frame comprising
- two spaced apart wheel support beams (230), and
- support beams (250) for supporting the water tray (400) of the water-layer unit (300);

wherein the water-layer unit (300) is provided with plants, and said plants are grown with access to the layer of water in the water tray.

To grow plants more uniformly across the container,
- the wheel support beams (230) have upper surface areas, and
- the support beams (250) provide support areas for the water tray (400) of the water-layer unit (300) that, in an empty first state, are higher than the upper surface areas of the wheel support beams (230).

## Description

The present invention relates to a method of growing plants using a water-layer system, said method making use of a moveable container comprising
- a water-layer unit comprising a water tray, said water tray
   - comprising a bottom and upright walls and
   - capable of holding a layer of water in said moveable container; and
- a rectangular frame, said rectangular frame comprising
   - two longitudinal side beams,
   - two transverse side beams connecting the two longitudinal side beams,
   - two wheel support beams
      - spaced apart from said transverse side beams,
      - connecting said two longitudinal side beams, and
      - each provided with wheels for moving the moveable container;
   - a plurality of support beams for supporting the water tray of the water-layer unit, said plurality of support beams
      - spaced apart from said transverse side beams and said wheel support beams,
      - connecting said two longitudinal side beams, and
      - supporting the water-layer unit;
wherein the water-layer unit is provided with plants, and said plants are grown with access to the layer of water in the water tray.

A method of growing plants in a confined space, such as a greenhouse, is known in the art. The confined space involves a substantial investment, and it is desirable to optimize the use of surface area in the confined space effectively so as to increase the yield of plants, which may be of any type (ornamental, herbs, vegetables, plants bearing seeds or fruits of any kind). As walking space between containers would reduce the surface area for growing plants, it is known to put the plants in moveable containers and place the containers adjacent to each other in an array. To save on labour cost, it is known to use a grid of tracks for moving the containers along the tracks to a desired location. To grow the plants, the containers provided with plants are stored in an array where the plants are provided with light and water (containing nutrients).

A problem of the method according the prior art is that plants do not grow uniformly across the container.

The object of the invention is to alleviate this problem.

To this end, a method according to the preamble is characterized in that
- the wheel support beams have upper surface areas, and
- the support beams provide support areas for the water tray of the water-layer unit, said support areas
   - being in an empty first state wherein the water-layer unit is absent from the moveable container higher than the upper surface areas of the wheel support beams, and
   - being in a second use-state at most 2 mm lower than the upper surface areas of the wheel support beams, said second use-state being any moment during the growth of the plants on the moveable container; and
the plants are grown with the support areas being in the second use-state.

To save cost, the moveable containers are made with as little material as possible. This renders moveable containers flexible and prone to sagging under load, which is exacerbated by their large dimensions (e.g. 3.70 m x 1.65 m). This causes the water used in the water-layer system to collect at the relatively low areas of the water tray, leaving less water height for the plants located close to the wheel support beams. As a result, the latter plants do not grow as well. With the method according to the present invention, a moveable container is used with a frame that - while flexible and relatively cheap - reduces the problem caused by strongly protruding wheel support beams in the second use-state.

It is preferred that in a second use-state the support areas are at least as high as the upper surface areas of the wheel support beams, and preferably higher, such as at least 2 mm higher and preferably at least 4 mm higher. The support beams may be curved support beams, with the highest support area of such a support beam being the upper surface areas.

In the present invention, the term water-layer system is a system containing a layer of water that is free to move. It may be an ebb-flood system, a shallow water growing system (where water containing nutrients and oxygen is supplied continuously through the water tray while maintaining a constant water level) or a Nutrient Film system (NTF system).

The number of support beams is for example at least 3, such as at least 4.

According to a favourable embodiment, the support beams are support beams comprising a support beam body provided with a height-adjustment device.

The height-adjustment device may be an adjustable device, for example a screw with a head, said head providing the support surface.

According to a favourable embodiment, the height-adjustment device is a removable clip.

By having a clip with a predetermined thickness, the height of the support surface can be provided discretely, saving time. Typically a large plurality of moveable containers have to be prepared for growing plants, which depending on the plants to be grown will mean a different weight to be supported by the rectangular frame. For a larger weight, a thicker clip will be provided.

According to a favourable embodiment, to grow the plants, the water tray is provided with a plurality of plant-trays, each plant-tray having feet;
wherein in no particular order
- the openings of the plant-tray are provided with a plurality of plants,
- the water tray is provided with water, and
- the water tray is provided with the plant-trays;
and the plants in the openings of the plant-trays are grown with the plant-trays being supported by the water tray with the feet of the plant-trays at the location of the support areas of the support beams.

Thus sagging of the water tray is avoided to a large extent, reducing variations in the distance of the root systems of the plants to the water surface.

Plants may be placed on top of the plant-tray or it may comprise a plurality of openings, each opening capable of receiving (the pot of) a plant.

Finally, the present invention relates to a moveable container for supporting a water-layer unit comprising a water tray, said moveable container; and
- a rectangular frame, said rectangular frame comprising
   - two longitudinal side beams,
   - two transverse side beams connecting the two longitudinal side beams,
   - two wheel support beams
      - spaced apart from said transverse side beams,
      - connecting said two longitudinal side beams, and
      - each provided with wheels for moving the moveable container;
   - a plurality of support beams for supporting the water tray of the water-layer unit, said plurality of support beams
      - spaced apart from said transverse side beams and said wheel support beams, and
      - connecting said two longitudinal side beams,
wherein
- the wheel support beams have upper surface areas, and
- the support beams provide support areas for the water tray of the water-layer unit, said support areas being in an empty first state wherein the water-layer unit is absent from the moveable container higher than the upper surface areas of the wheel support beams.

Such moveable container is useable in the method according to the present invention. It may be relatively weak (and thus relatively cheap), as sagging by a load during will at first be accommodated for by the support beams, and the risk of the wheel support beams locally lifting the bottom of the water-tray which would affect water distribution in the water-tray is reduced.

A moveable container typically comprises wheels that allow the container to roll along a track.

The number of support beams is for example at least 3, such as at least 4.

The invention also relates to any of the container embodiments discussed above alone or in any combination; repetition of which has been abstained from for the sake of brevity only.

The present invention will now be illustrated with reference to the drawing where
Fig. 1 shows a perspective view on a moveable container;
Fig. 2 shows a perspective view on a frame of the moveable container of Fig. 1;
Fig. 3 shows a top view on the moveable container of Fig. 1;
Fig. 4A and Fig. 4B show a cross-sectional view along line IV-IV of Fig. 3 of the container and a corresponding exploded view; and
Fig. 5A and Fig. 5B show a cross-sectional view along line V-V of Fig. 3 of the container and a corresponding exploded view.

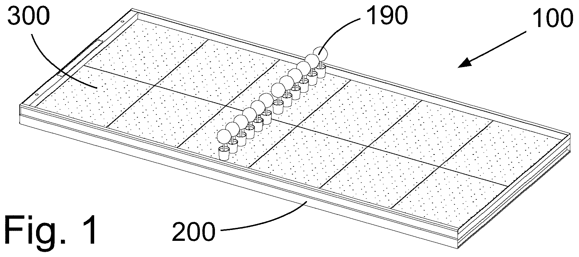

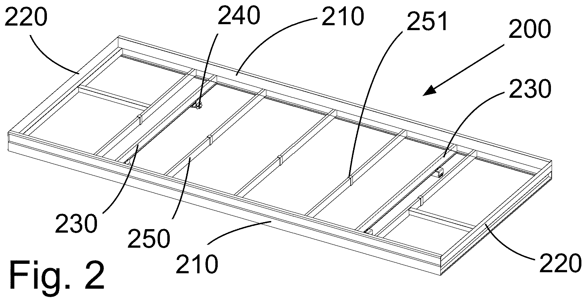

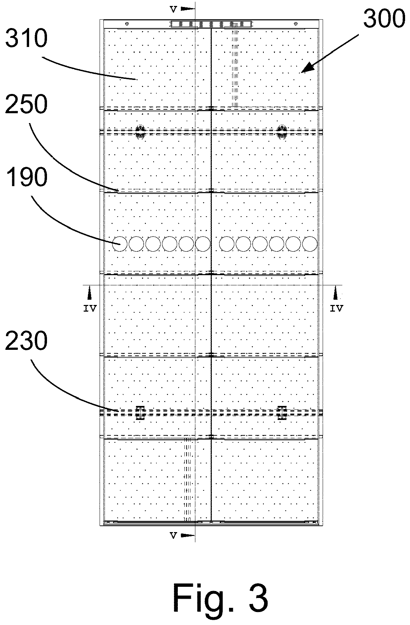

Fig. 1 shows a perspective view on a moveable container 100 comprising a rectangular frame 200 (discussed with reference to Fig. 2) and water-layer unit 300 (discussed with reference to Figs. 3 - 5). The water-layer unit 300 is provided with plants 190, in the embodiment shown potted plants 190.

Fig. 2 shows a perspective view on the rectangular frame 200 of the moveable container 100 of Fig. 1.

The rectangular frame 200 comprises two longitudinal side beams 210 and two transverse side beams 220 connecting the two longitudinal side beams 210. In addition, the rectangular frame 200 comprises two wheel support beams 230 connecting said two longitudinal side beams 210 and are each provided with wheels 240 for moving the moveable container 100 along tracks.

The rectangular frame 200 also comprises support beams 250 for supporting the water-layer unit 300.

A rectangular frame as described above is known in the art.

In accordance with a preferred embodiment of the present invention, the support beams 250 are profiles (support beam bodies) provided with clips 251, so as to allow the water-layer unit 300 to rest on said clips 251. Thus, sagging of the water-layer unit 300 under the load it carries in use (plants and water used for watering said plants etc.) is least partially compensated for.

In accordance with the present invention, in use the top sides of the wheel support beams 230 are lower than the top sides of the clips 251 of the support beams 250 for the water-layer unit 300.

Fig. 3 shows a top view on the moveable container 100 of Fig. 1. The wheel support beams 230 and the support beams for the water-layer unit 300 have been indicated with broken lines.

The water-layer unit 300 comprises plant-trays 310 (here 12) as will be shown in more detail below. In the embodiment shown here, the potted plants 190 are placed on top of the plant-trays 310. In other embodiments the plant-trays 310 may have openings for partially receiving the (taped) pot of the potted plant 190.

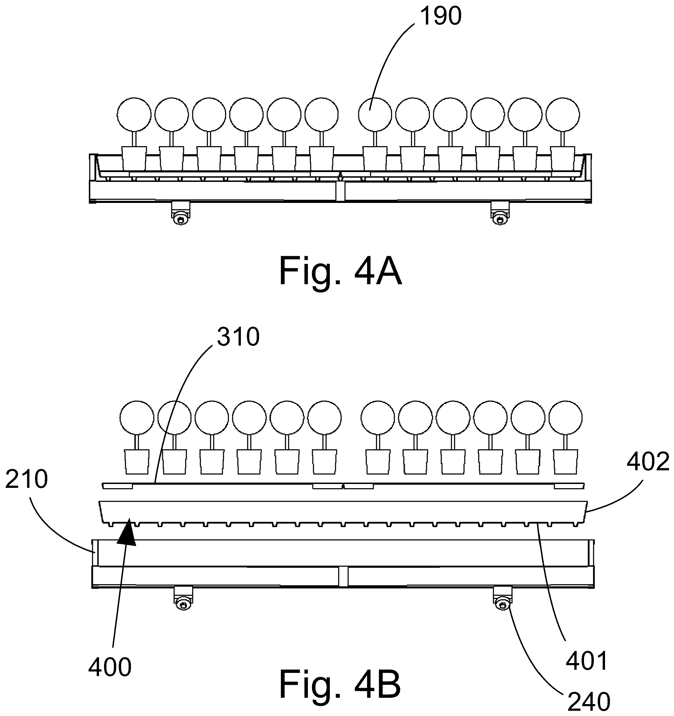

Fig. 4A and Fig. 4B show a cross-sectional view along line IV-IV of Fig. 3 of the container 100 and a corresponding exploded view. The water-layer unit 300 comprises a water tray 400 having a bottom 401 and upright walls 402.

The plant-trays 310 have feet 410 and these rest via the bottom 401 of the water tray 400 on the clips 251 so as to compensate for sagging of the support beams 250.

In the embodiment shown here, the bottom 401 comprises ribs extending in the longitudinal direction to reinforce the bottom 401 and reduce sagging halfway the length of the water tray 400.

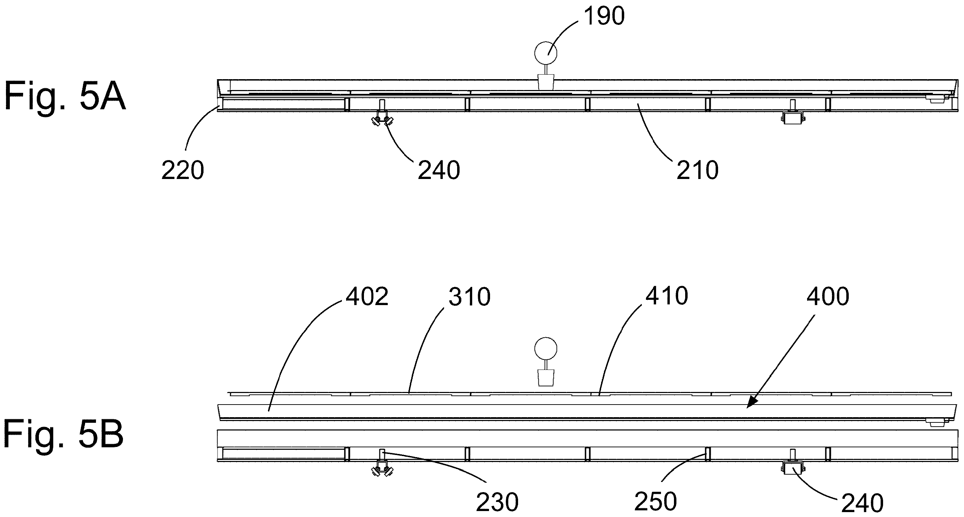

Fig. 5A and Fig. 5B show a cross-sectional view along line V-V of Fig. 3 of the container and a corresponding exploded view.

In an unloaded state, the top sides of the wheel support beams 230 are lower than the top sides of the clips 251 of the support beams 250 for the water-layer unit 300.

## Claims

1. A method of growing plants (190) using a water-layer system, said method making use of a moveable container (100) comprising
- a water-layer unit (300) comprising a water tray (400), said water tray (400)
- comprising a bottom (401) and upright walls (402) and
- capable of holding a layer of water in said moveable container (100); and
- a rectangular frame (200), said rectangular frame (200) comprising
- two longitudinal side beams (210),
- two transverse side beams (220) connecting the two longitudinal side beams (210),
- two wheel support beams (230)
- spaced apart from said transverse side beams (220),
- connecting said two longitudinal side beams (210), and
- each provided with wheels (240) for moving the moveable container (100);
- a plurality of support beams (250) for supporting the water tray (400) of the water-layer unit (300), said plurality of support beams (250)
- spaced apart from said transverse side beams (220) and said wheel support beams (230),
- connecting said two longitudinal side beams (210), and
- supporting the water-layer unit (300);
wherein the water-layer unit (300) is provided with plants (190), and said plants (190) are grown with access to the layer of water in the water tray (400);
**characterized in that**
- the wheel support beams (230) have upper surface areas, and
- the support beams (250) provide support areas for the water tray (400) of the water-layer unit (300), said support areas
- being in an empty first state wherein the water-layer unit (300) is absent from the moveable container (100) higher than the upper surface areas of the wheel support beams (230), and
- being in a second use-state at most 2 mm lower than the upper surface areas of the wheel support beams (230), said second use-state being any moment during the growth of the plants (190) on the moveable container (100); and
the plants (190) are grown with the support areas being in the second use-state.

2. The method according to claim 1, wherein the support beams (250) are support beams (250) comprising a support beam body provided with a height-adjustment device.

3. The method according to claim 2, wherein the height-adjustment device is a removable clip (251).

4. The method according to any of the preceding claims, wherein to grow the plants (190), the water tray (400) is provided with a plurality of plant-trays (310), each plant-tray (400) having feet (410);
wherein in no particular order
- the openings of the plant-tray (400) are provided with a plurality of plants (190),
- the water tray (400) is provided with water, and
- the water tray (400) is provided with the plant-trays (310);
and the plants (190) in the openings of the plant-trays (310) are grown with the plant-trays (310) being supported by the water tray (400) with the feet (410) of the plant-trays (310) at the location of the support areas of the support beams (250).

5. A moveable container (100) for supporting a water-layer unit (300) comprising a water tray (400), said moveable container (100); and
- a rectangular frame (200), said rectangular frame (200) comprising
- two longitudinal side beams (210),
- two transverse side beams (220) connecting the two longitudinal side beams (210),
- two wheel support beams (230)
- spaced apart from said transverse side beams (220),
- connecting said two longitudinal side beams (210), and
- each provided with wheels (240) for moving the moveable container (100);
- a plurality of support beams (250) for supporting the water tray (400) of the water-layer unit (300), said plurality of support beams (250)
- spaced apart from said transverse side beams (220) and said wheel support beams (230), and
- connecting said two longitudinal side beams (210),
**characterized in that**
- the wheel support beams (230) have upper surface areas, and
- the support beams (250) provide support areas for the water tray (400) of the water-layer unit (300), said support areas being in an empty first state wherein the water-layer unit (300) is absent from the moveable container (100) higher than the upper surface areas of the wheel support beams (230).
